# EUROPEAN PATENT SPECIFICATION

(11) **EP 1 794 516 B1**
(45) Date of publication and mention of the grant of the patent: **26.09.2012**
(21) Application number: 05789103.8
(22) Date of filing: 18.08.2005
(51) Int. Cl.: F24F 5/00, F25D 16/00, F25D 17/02

(54) **THERMAL ENERGY STORAGE AND COOLING SYSTEM WITH SECONDARY REFRIGERANT ISOLATION**
SYSTEM MIT SEKUNDÄRKÄLTEMITTELISOLATION ZUM SPEICHERN UND KÜHLEN VON WÄRMEENERGIE
SYSTEME DE STOCKAGE D'ENERGIE THERMIQUE ET DE REFROIDISSEMENT A ISOLATION SECONDAIRE PAR REFRIGERANT

(30) Priority: 18.08.2004 US 602774 P
(43) Date of publication of application: 13.06.2007
(73) Proprietor: Ice Energy Holdings, Inc., Fort Collins CO 80525 (US)
(72) Inventor: NARAYANAMURTHY, Ramachandran, Loveland, Colorado 80538 (US)
(74) Representative: Richards, John
(86) International application number: PCT/US2005/029535
(87) International publication number: WO 2006/023716

(56) References cited:
- EP-A- 1 441 183
- DE-U1- 29 823 175
- US-A- 5 237 832
- US-A- 6 112 543
- US-B1- 6 260 376
- PATENT ABSTRACTS OF JAPAN vol. 008, no. 069 (M-286), 31 March 1984 (1984-03-31) -& JP 58 217133 A (YAZAKI SOUGIYOU KK), 17 December 1983 (1983-12-17)

## Description

### Background of the Invention

### a. Field of the Invention

The present invention relates generally to systems providing stored thermal energy in the form of ice, and more specifically to refrigerant-based ice storage air conditioning systems used to provide cooling load during peak electrical demand.

### b. Description of the Backgound

With the increasing demands on peak demand power consumption, ice storage has been utilized to shift air conditioning power loads to off-peak times and rates. A need exists not only for load shifting from peak to off-peak periods, but also for increases in air conditioning unit capacity and efficiency. Current air conditioning units having energy storage systems have had limited success due to several deficiencies including reliance on water chillers that are practical only in large commercial buildings and have difficulty achieving high-efficiency. In order to commercialize advantages of thermal energy storage in large and small commercial buildings, thermal energy storage systems must have minimal manufacturing costs, maintain maximum efficiency under varying operating conditions, emanate simplicity in the refrigerant management design, and maintain flexibility in multiple refrigeration or air conditioning applications.

Systems for providing thermal stored energy have been previously contemplated in U.S. Patent No. 4,735,064, U.S. Patent No. 4,916,916, both issued to Harry Fischer, U.S. Patent No. 5,647,225 issued to Fischer et al., U.S. Patent Application No. 10/967,114 filed October 15, 2004 by Narayanamurthy et al., U.S. Patent Application No. 11/112,861 filed

April 22, 2005 by Narayanamurthy et al, and U.S. Patent Application No. 11/138,762 filed May 25, 2005 by Narayanammurthy et al. All of these patents utilize ico storage to shift air. conditioning loads from peak to off-peak electric rates to provide economic justification. 6,112,543 discloses a cooling device for a motor vehicle that has a secondary circuit for transferring cold generated in an evaporator of a primary cooling circuit of a cooling unit, by means of a coolant to at least one cold accumulator and/or to at least one heat exchanger for cooling the air fed to a vehicle interior. The secondary circuit has a control and distribution unit that feeds a first traction of coolant flow, the level of which can be adjusted, to the cold accumulator, and a second faction of coolant flow, the level of which can also be adjusted, to the heat exchanger. The cooling device allows optimum use of the cold accumulator during standard air-conditioning or in the peak load range, improves passenger comfort in the vehicle, and prevents frosting of the heat exchanger.

JP 58-217133 discloses an outdoor heat discharge means including a snow thawing panel that is adopted to discharge heat pumped up by a heat pump from a low temperature heat source which is capable of storing heat. A second indoor heat discharge means including a heat exchanger is adopted to discharge heat from the low temperature heat source. In other words, the heat stored in the low temperature heat source is pumped up by the heat pump and is discharged through the snow thawing panel to thereby thaw snow in winter. In this case, the heat source which has had its heat pumped up by the heat pump is cooled and frozen. Further, in summer, the coolant which has been stored in the heat source for a long time since the last winter is discharge into the room through the heat exchanger to thereby cool the room.

### Summary of the Invention

An embodiment of the present invention may therefore comprise a refrigerant-based thermal energy storage and cooling system comprising the features according to claim 1

The present invention may further comprise a method of providing cooling with a refrigerant-based thermal energy storage and cooling system comprising the steps according to claim 21.

### Brief Description of the Drawings

In the drawings,
FIGURE 1 illustrates an embodiment of a refrigerant-based thermal energy storage and cooling system with secondary refrigerant isolation.
FIGURE 2 is a table representing valve status conditions for the refrigerant-based thermal energy storage and cooling system with secondary refrigerant isolation illustrated in Figure 1.
FIGURE 3 illustrates a configuration of a refrigerant-based thermal energy storage and cooling system with secondary refrigerant isolation during an ice-make (charging) cycle.
FIGURE 4 illustrates a configuration of a refrigerant-based thermal energy storage and cooling system with secondary refrigerant isolation during an ice-melt (cooling) cycle.
FIGURE 5 illustrates another embodiment of a refrigerant-based thermal energy storage and cooling system with secondary refrigerant isolation.
FIGURE 6 illustrates another embodiment of a refrigerant-based thermal energy storage and cooling system with secondary refrigerant isolation.
FIGURE 7 illustrates an embodiment of a net-zero peak power refrigerant-based thermal energy storage and cooling system with secondary refrigerant isolation.
FIGURE 8 illustrates an embodiment of a net-zero peak power refrigerant-based thermal energy storage and cooling system with secondary refrigerant isolation.

### Detailed Description of the Invention

While this invention is susceptible to embodiment in many different forms, there is shown in the drawings and will be described herein in detail specific embodiments thereof with the understanding that the present disclosure is to be considered as an exemplification of the principles of the invention and is not to be limited to the specific embodiments described.

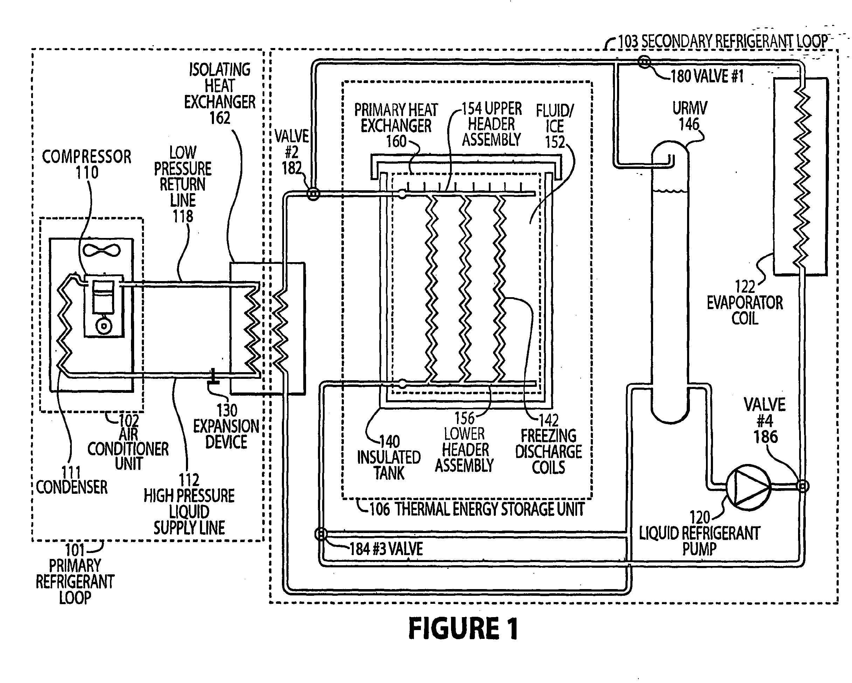

The disclosed embodiments overcome the disadvantages and limitations of the prior art by providing a refrigerant-based thermal storage system method and device wherein a condensing unit and an ice-tank heat exchanger can be isolated through a second heat exchanger. As illustrated in Figure 1, an air conditioner unit 102 utilizing a compressor 110 to compress cold, low pressure refrigerant gas to hot, high-pressure gas. Next, a condenser 111 removes much of the heat in the gas and discharges the heat to the atmosphere. The refrigerant comes out of the condenser as a warm, high-pressure liquid refrigerant delivered through a high-pressure liquid supply line 112 to an isolating heat exchanger 162 through an expansion valve 130. This expansion valve 130 may be a conventional thermal expansion valve, a mixed-phase regulator and surge vessel (reservoir) or the like. Low-pressure vapor phase and liquid refrigerant is then returned to compressor 110 via low pressure return line 118 completing the primary refrigeration loop.

Cooling is transferred to a secondary refrigeration loop including a thermal energy storage unit 106 through the isolating heat exchanger 162. The thermal energy storage unit 106 comprises an insulated tank 140 that houses the primary heat exchanger 160 surrounded by fluid/ice depending on the current system mode. The primary heat exchanger 160 further comprises a lower header assembly 156 connected to an upper header assembly 154 with a series of freezing and discharge coils 142 to make a fluid/vapor loop within the insulated tank 140. The upper and lower header assemblies 154 and 156 communicate externally of the thermal energy storage unit 106 with inlet and outlet connections.

An evaporator coil 122 is connected within the secondary closed loop refrigeration circuit to the isolating heat exchanger 162 to transmit cooling from the air conditioner unit 102 to a load in one mode (isolated direct cooling) of the system. The evaporator coil 122 is also connected within the secondary closed loop refrigeration circuit to the primary heat exchanger 160 to receive cooling in another mode (thermal storage cooling). Valves 180-186 are placed in various places within the secondary refrigerant circuits to allow these multi-mode conditions with minimal complexity and plumbing. The valve types and configurations presented are specified for demonstrative purposes and any variety of valve or circuit configurations may be used in conjunction with the disclosed systems and fall within the scope of the invention. Acting as a collector and phase separator of multi-phase refrigerant, an accumulator or universal refrigerant management vessel (URMV) 146 is in fluid communication with both the thermal energy storage unit 106 and the evaporator coil 122. A liquid refrigerant pump 120 is placed on the downstream side of the URMV 146 to pump refrigerant through refrigerant loops to either the evaporator coil 122 or the thermal energy storage unit 106 depending upon the current mode.

The embodiment illustrated in Figure 1 utilizes the air conditioner unit 102 as the principal cooling source. The thermal energy storage unit 106 operates using an independent refrigerant (or phase change) loop that transfers the heat between the air conditioner unit 102 and the thermal energy storage unit 106 or a load, represented by the evaporator coil 122. The disclosed embodiment functions in two principal modes of operation, ice-make (charging) and ice-melt (cooling) mode.

In ice-make mode, compressed high-pressure refrigerant leaves the air conditioner unit 102 through high-pressure liquid supply line 112 and is fed through an expansion valve 130 to cool the primary side of the isolating heat exchanger 162. Warm liquid and vapor phase refrigerant leaves the isolating heat exchanger 162, returns to the air conditioner unit 102 through the low pressure return line 118 and is fed to the compressor 110 and recondensed into liquid. The heat transfer between the primary loop and the secondary loop is accomplished by the isolating heat exchanger 162. Fluid leaving the isolating heat exchanger 162 on the secondary side flows to the URMV 146 where the cooled liquid phase refrigerant is accumulated and stored. The fluid leaves the URMV 146 and is pumped by a liquid refrigerant pump 120 to the thermal energy storage unit 106 where it enters the primary heat exchanger 160 through the lower header assembly 156 and is then distributed through the freezing coils 142 which act as an evaporator. Cooling is transmitted from the freezing coils 142 to the surrounding fluid 152 that is confined within the insulated tank 140 and eventually produces a block of ice surrounding the freezing coils 142 and storing thermal energy in the process. Warm liquid and vapor phase refrigerant leave the freezing coils 142 through the upper header assembly 154 and exit the thermal energy storage unit 106 returning to the isolating heat exchanger 162 being cooled and condensed once again.

In ice-melt mode, cool liquid refrigerant leaves URMV 146 and is pumped by a liquid refrigerant pump 120 to the evaporator coil 122 where cooling is transferred to a load. Warm liquid and vapor phase refrigerant leave evaporator coil 122 where the liquid phase is returned to the upper portion of the URMV 146 and vapor phase refrigerant is fed to the upper header assembly 154 of the thermal energy storage unit 106. Vapor phase refrigerant proceeds through the discharge coils 142 drawing cooling from the block of ice 152 surrounding the coils, where warm refrigerant is cooled and condensed to cool liquid phase refrigerant. This cool liquid phase refrigerant leaves the primary heat exchanger 160 via the lower header assembly 156 and exits the thermal energy storage unit 106 where it is fed into the lower portion of the URMV 146. The two principal modes of operation, ice-make and ice-melt performed with the apparatus of Figure 1 are accomplished with the use of a series of valves 180-186 that control the flow of refrigerant through various apparatus which can perform dual functions depending upon the mode.

Because the system isolates a primary refrigerant loop 101 from a secondary refrigerant loop 103, the system additionally allows the use of different refrigerants to be used within the device. For example, one type of highly efficient refrigerant that may have properties that would discourage use within a dwelling (such as propane) may be utilized within the primary refrigerant loop 101, while a more suitable refrigerant (such as R-22 or R-410A) can be used for the secondary refrigerant loop 103 that may enter the dwelling. This allows greater versatility and efficiency of the system while maintaining safety, environmental and application issues to be addressed.

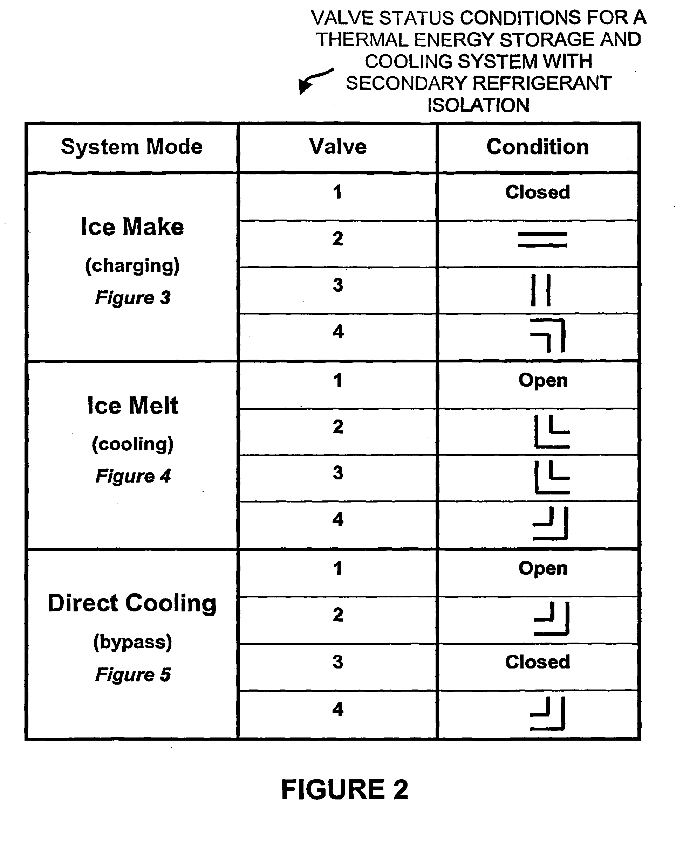

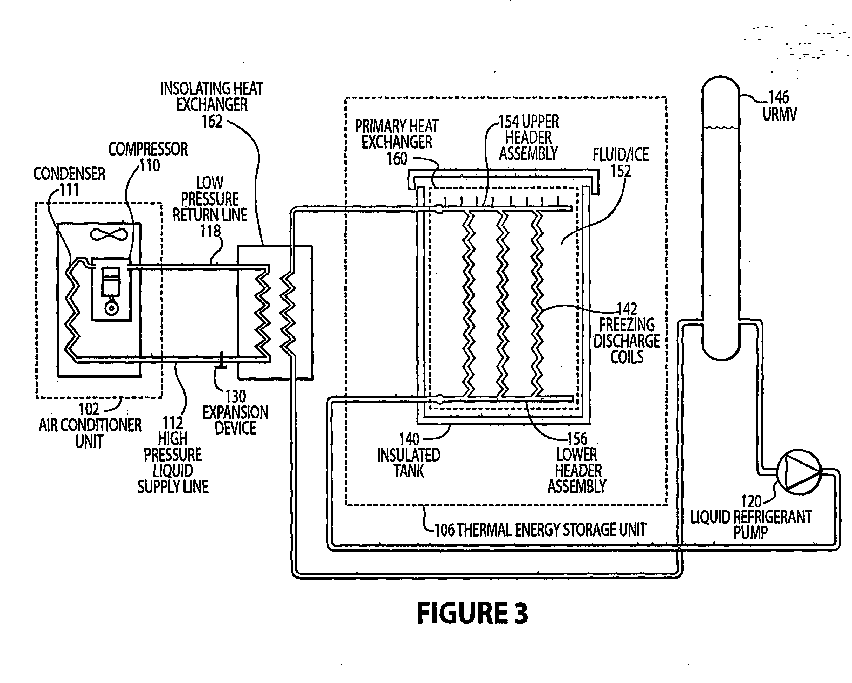

Figure 2 is a table representing valve status conditions for the refrigerant-based energy storage and cooling system with secondary refrigerant isolation 200 that is illustrated in Figure 1. As shown in the table of Figure 2, during the ice-make process, valve #1 180 is in a closed condition, valve #2 182 allows flow only from the thermal energy storage unit 106 to the isolating heat exchanger 162, and valve #4 186 directs flow from the liquid refrigerant pump 120 to the thermal energy storage unit 106. With the valves in this state, the evaporator coil is removed from the secondary loop. This causes refrigerant to flow through the primary heat exchanger 160, which acts as an evaporator, and returns refrigerant through valve #2 to the isolating heat exchanger 162 acting as a condenser. Valve #3 184 allows flow only between the refrigerant pump and the thermal energy storage unit 106. With each of the values 180-186 in this ice-make condition, the system flows as shown in Figure 3.

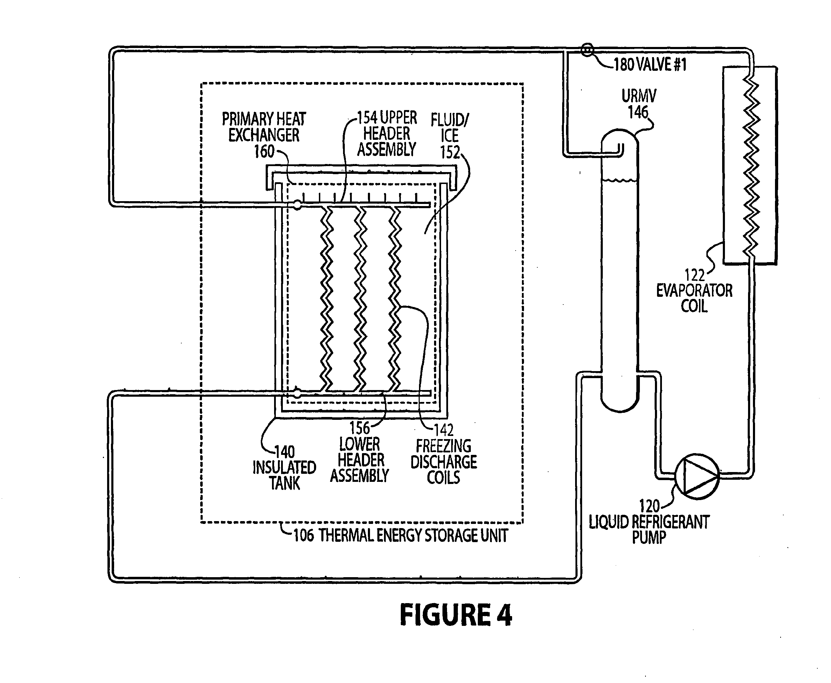

During the ice-melt process, valve #4 186 directs flow from the liquid refrigerant pump 120 to the evaporator coil 122, valve #1 180 is in an open condition, and valve #2 182 allows flow only from the evaporator coil 122 to the thermal energy storage unit 106 and the URMV 146. With the valves in this state, the evaporator coil receives cooling to transfer to a load. This causes refrigerant to flow through the primary heat exchanger 160 in the opposite direction as in the ice-make mode and allows the primary heat exchanger to act as a condenser. Valve #3 184 allows flow only between the thermal energy storage unit 106 and the URMV 146. With each of the valves 180-186 in this ice-melt condition, the system flows as shown in Figure 4.

As described in the above embodiment, the isolating heat exchanger 162 acts as an evaporator for the air conditioner unit 102 and as a condenser for the thermal energy storage unit 106. As a result, the air conditioner unit 102 operates at a lower suction temperature, but the loss in efficiency is overpowered by the decrease in cost of the system. During the ice-melt process, there are two options available. The refrigerant can be fed from the thermal energy storage unit 106 to the evaporator coil 122 as shown in Figure 1, or the evaporator coil 122 can be utilized as yet another heat exchanger to exchange heat with yet another circuit. This option will entail usage of an additional pump to drive the additional circuit.

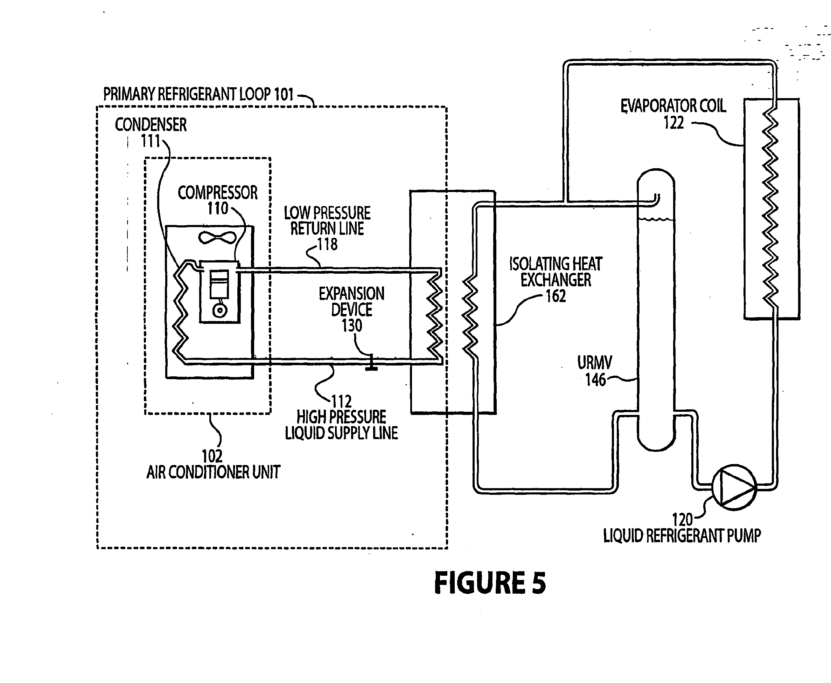

Additionally shown in the table of Figure 2 is a condition in which the thermal energy storage capacity of the system may be bypassed and the air conditioner unit 102 is utilized to provide direct cooling to the evaporator coil 122. During the direct cooling process, valve #1 180 is in an open condition, valve #2 182 allows flow from the evaporator coil 122 to the isolating heat exchanger 162 and the URMV 146, valve #3 184 is closed and valve #4 186 directs flow from the liquid refrigerant pump 120 to the evaporator coil 122. With the valves in this state, the thermal energy storage unit is removed from the secondary loop. This causes refrigerant to flow through the isolating heat exchanger 162, which acts as a condenser, and returns refrigerant through the URMV 146 to the evaporator coil 122. With each of the valves 180-186 in this direct cooling condition, the system flows as shown in Figure 5.

Figure 3 illustrates a configuration of the refrigerant-based energy storage and cooling system with secondary refrigerant isolation of Figure 1 during an ice-make (charging) cycle. With each of the valves 180-186 in the ice-make mode, as detailed in the table of Figure 2, compressed high-pressure refrigerant leaves the air conditioner unit 102 through the high-pressure liquid supply line 112 and is fed through an expansion valve 130 to cool the primary side of the isolating heat exchanger 162. Warm liquid and vapor phase refrigerant leave the isolating heat exchanger 162 and returns to the air conditioner unit 102 through the low pressure return line 118 and is fed to the compressor 110 where it is re-condensed into liquid. The heat transfer between the primary loop and the secondary loop is accomplished by the isolating heat exchanger 162. Fluid leaving the isolating heat exchanger 162 on the secondary side flows to the URMV 146 where the cooled liquid phase refrigerant is accumulated. The fluid leaves the URMV 146 and is pumped by a liquid refrigerant pump 120 to the thermal energy storage unit 106 where it enters the primary heat exchanger 160 through the lower header assembly 156 and is then distributed through the freezing coils 142 which act as an evaporator. Cooling is transmitted from the freezing coils 142 to the surrounding fluid 152 that is confined within insulated tank 140 and eventually produces a block of ice surrounding the freezing coils 142 and storing thermal energy in the process. Cool liquid and vapor phase refrigerant leave the freezing coils 142 through upper header assembly 154 and exit the thermal energy storage unit 106 and return to the isolating heat exchanger 162 and are cooled and condensed once again.

Figure 4 illustrates a configuration of the refrigerant-based energy storage and cooling system with secondary refrigerant isolation of Figure 1 during an ice-melt(cooling) cycle. With each of the valves 180-186 in the ice-melt mode, as detailed in the table of Figure 2, cool liquid refrigerant leaves URMV 146 and is pumped by a liquid refrigerant pump 120 to the evaporator coil 122 where cooling is transferred to a load. Warm liquid and vapor phase refrigerant leave evaporator coil 122 where the liquid phase is returned to the upper portion of the URMV 146 and vapor phase refrigerant is fed to the upper header assembly 154 of the thermal energy storage unit 106. Vapor phase refrigerant proceeds through the discharge coils 142 drawing cooling from the block of ice 152 surrounding the coils where it is cooled and condensed to cool liquid phase refrigerant. This cool liquid phase refrigerant leaves the primary heat exchanger 160 via the lower header assembly 156 and exits the thermal energy storage unit 106 where it is fed into the lower portion of the URMV 146.

Figure 5 illustrates a configuration of the refrigerant-based energy storage and cooling system with secondary refrigerant isolation of Figure 1 during a direct cooling cycle. In this configuration the thermal energy storage unit is bypassed and cooling is delivered directly form the condenser 111 to the evaporator coil 122 through the isolating heat exchanger 162. With each of the valves 180-186 in the direct cooling mode, as detailed in the table of Figure 2, the air conditioning unit 102 transfers cooling to the primary side of the isolating heat exchanger 162 where cooling is transferred to the secondary side to cool and condense refrigerant in the secondary loop. Cooled liquid refrigerant leaves the isolating heat exchanger 162 and is accumulated in the URMV 146. Cool liquid refrigerant leaves URMV 146 and is pumped by a liquid refrigerant pump 120 to the evaporator coil 122 where cooling is transferred to a load. Warm liquid and vapor phase refrigerant leave evaporator coil 122 where the liquid phase is returned to the upper portion of the URMV 146 and vapor phase refrigerant is fed back to the isolating heat exchanger 162.

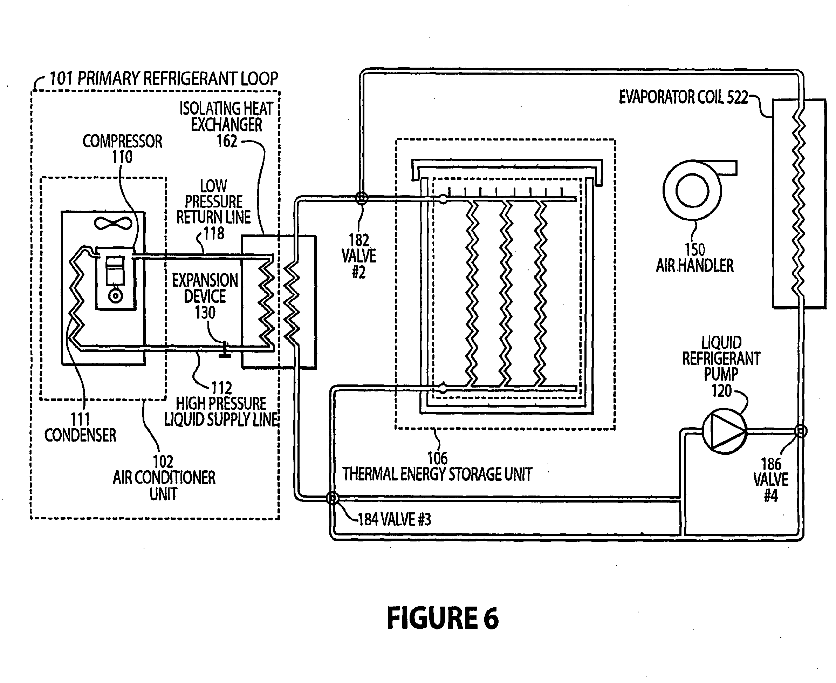

Figure 6 illustrates another embodiment of a refrigerant-based energy storage and cooling system with secondary refrigerant isolation. This embodiment functions without the need for an accumulator vessel or URMV reducing cost and complexity of the system. The embodiment of Figure 6 utilizes the same primary refrigeration loop 101 as shown in Figure 1 using an air conditioner unit 102 with a compressor 110 and condenser 111 creating high-pressure liquid refrigerant delivered through a high-pressure liquid supply line 112 to an isolating heat exchanger 162 through an expansion valve 130 and low-pressure refrigerant then being returned to compressor 110 via low pressure return line 118. Cooling is transferred to a secondary refrigeration loop including a thermal energy storage unit 106 through the isolating heat exchanger 162. This thermal energy storage unit 106 is structurally comparable to that depicted in Figure 1, and acts as an evaporator in the ice-make mode and as a condenser in the ice-melt mode. An evaporator coil 122 in conjunction with an air handler 150 is connected within the secondary closed loop refrigeration circuit to the isolating heat exchanger 162 to transmit cooling from the primary refrigeration loop 101 and provide isolated, direct cooling in one mode.

The evaporator coil 122 is also connected within the closed secondary loop refrigeration circuit to the thermal energy storage unit 106 to receive cooling in another mode (thermal storage cooling). Valves 182-186 are placed in various places within the secondary refrigerant circuits to allow these multi-mode conditions with minimal complexity and plumbing. The valve types and configurations presented are specified for demonstrative purposes and any variety of valve or circuit configurations may be used in conjunction with the disclosed systems and fall within the scope of the invention. A liquid refrigerant pump 120 in placed in the secondary refrigeration loop to pump refrigerant to either the evaporator coil 122 or the thermal energy storage unit 106 depending upon the current mode.

The present embodiment also functions in two principal modes of operation, ice-make and ice-melt mode. In ice-make mode, the primary refrigerant loop 101 is used to cool the primary side of the isolating heat exchanger 162 that transfers heat to the secondary loop. Fluid leaving the isolating heat exchanger 162 on the secondary side flows to the liquid refrigerant pump 120 where the cooled liquid phase refrigerant is distributed to the thermal energy storage unit 106 acting as an evaporator. The liquid refrigerant pump 120 is placed below the level of the isolating heat exchanger 162 so that sufficient liquid head above the pump can be maintained. Cooling is transmitted to fluid that is confined within the thermal energy storage unit 106 thus storing thermal energy. Warm liquid and vapor phase refrigerant leaves the thermal energy storage unit 106 and returns to the isolating heat exchanger 162 and is cooled and condensed once again.

In ice-melt mode, cool liquid refrigerant is drawn from the thermal energy storage unit 106 and is pumped by a liquid refrigerant pump 120 to the evaporator coil 122 where cooling is transferred to a load with the aid of an air handler 150. Warm mixture of liquid and vapor phase refrigerant leaves the evaporator coil 122 where the mixture is returned to the thermal energy storage unit 106 now acting as a condenser. Vapor phase refrigerant is cooled and condensed by drawing cooling from the cold fluid or ice. As with the embodiment of Figure 1, two principal modes of operation, ice-make and ice-melt are performed with the use of a series of valves 182-186 that control the flow of refrigerant through various apparatus which can perform multiple functions depending upon the mode.

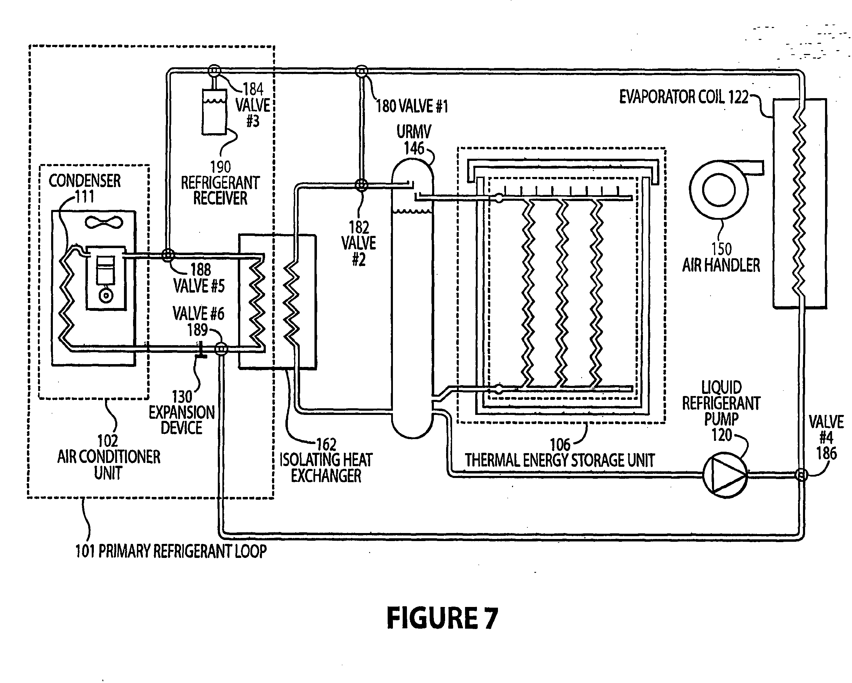

Figure 7 illustrates another embodiment of a refrigerant-based energy storage and cooling system. This embodiment deviates from the system of Figure 1 by the location of the accumulator vessel and by the addition of a third mode of operation, a direct cooling mode that bypasses the secondary refrigeration isolation for use when direct cooling from the air conditioner unit 102 may be desirable. The embodiment of Figure 6 utilizes the same primary refrigeration loop 101 as shown in previous embodiments but additionally adds a direct cooling loop to provide a non-isolated, direct loop to a cooling load from an air conditioner unit 102.

As with the previous bi-modal embodiments, the primary refrigerant loop 101 can be used to cool the primary side of the isolating heat exchanger 162 that transfers heat to the secondary loop. Fluid leaving the isolating heat exchanger 162 on the secondary side flows to the URMV 146 and is distributed as liquid refrigerant to either the thermal energy storage unit 106 (ice-make mode), or to the evaporator coil 122 through the liquid refrigerant pump 120 (ice-melt mode), and returned to the upper portion of the URMV 146.

In ice-make mode, cooling is transferred directly to the thermal energy storage unit 106 (acting as an evaporator) where the thermal energy is stored as ice. In ice-melt mode, cool liquid refrigerant is drawn from the thermal energy storage unit 106 through the URMV 146 and is pumped to the evaporator coil 122 where cooling is transferred to a load with the aid of an air handler 150. Warm liquid and vapor phase refrigerant leaves the evaporator coil 122 where the liquid phase is returned to the thermal energy storage unit 106 now acting as a condenser. Vapor phase refrigerant is accumulated in the upper URMV 146 and drawn into the thermal energy storage unit 106 where it is cooled and condensed with the cold fluid or ice.

With the current configuration of the energy storage and cooling system, an additional mode can be utilized which has the ability to provide non-isolated, direct cooling from the primary refrigeration loop 101 to the cooling load through the evaporator coil 122 with the aid of an air handler 150. In this mode the isolating heat exchanger 162 and the thermal energy storage unit 106 are bypassed to provide this direct cooling. As with the previously described embodiments, the principal modes of operation, ice-make, ice-melt, and direct cooling are performed with the use of a series of valves 180-189 that control the flow of refrigerant through various apparatus.

During the ice-make mode, valve #5 188 and valve #6 189 close the external loop to the evaporator coil 122 and retain the fluid within the primary refrigeration loop 101. Valves #1 180 and #4 186 are closed and valve #2 182 is open. During the ice-melt process, valve #5 188 and valve #6 189 remain in the ice-make condition retaining the fluid within the primary refrigeration loop 101. Valve #1 180 allows flow only from the evaporator coil 122 to the URMV 146 and valve #4 186 allows flow only from the liquid refrigerant pump 120 to the evaporator coil 122. During the direct cooling mode, valve #5 188 and valve #6 189 prevent flow to the isolating heat exchanger 162 and direct flow to the external loop of the evaporator coil 122. Valve #1 180 allows flow only from evaporator coil 122 to valve #3 184 that controls a refrigerant receiver 190, and flow to the air conditioner unit 102. Valve #4 186 allows flow only from the air conditioner unit 102 to the evaporator coil 122.

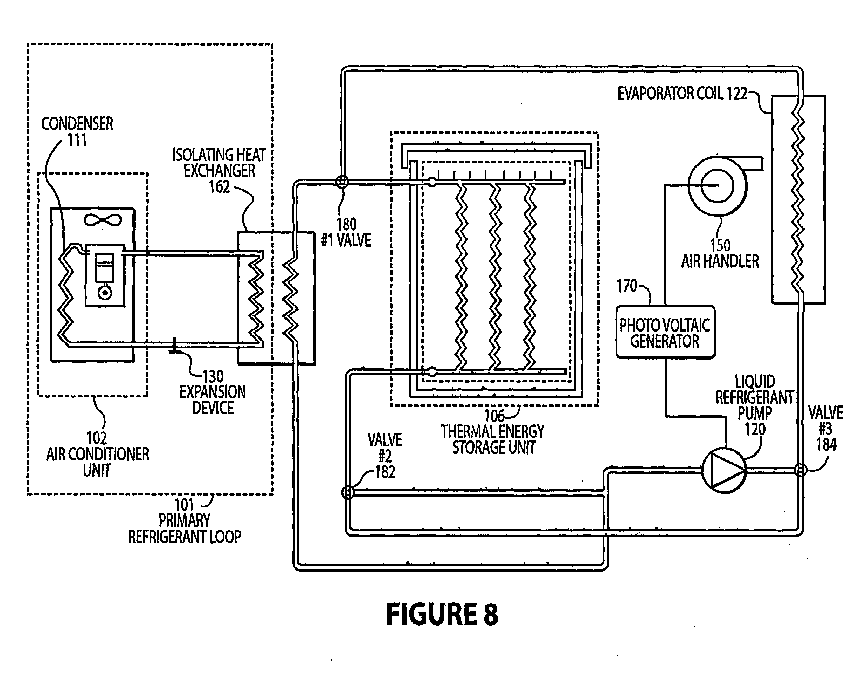

Figure 8 illustrates an embodiment of a net-zero peak power refrigerant-based energy storage and cooling system with secondary refrigerant isolation. This embodiment is the system of Figure 6 with the addition of a photovoltaic generator 170 placed within the apparatus to power the air handler 150 and the liquid refrigerant pump 120 during the ice-melt mode. This allows the system to be used during peak demand times at a net-zero power draw from a utility.

Peak usage conditions for air conditioners generally come at times when the outside temperature is very high. At such times, it is difficult for the condenser to reject internal heat to the atmosphere. By utilizing the aforementioned embodiments, systems that overcome these conditions are realized. The disclosed systems incorporate multiple operating modes, the ability to add optional components, and the integration of smart controls that assure energy is stored at maximum efficiency. When connected to a condensing unit, the system stores refrigeration energy in a first time period, and utilizes the stored energy during a second time period to provide cooling. In addition, the condensing unit can bypass the refrigerant energy storage system to provide direct or instantaneous cooling (either isolated or not) during a third time period.

The detailed embodiments detailed above, offer numerous advantages such as minimizing additional components (and therefore, cost). In addition, the systems use very little energy beyond that used by the condensing unit to store the energy, and with the use of a photovoltaic generator, produces a net-zero power draw system during peak demand power rates. The refrigerant energy storage design has been engineered to provide flexibility so that it is practicable for a variety of applications and has further advantage over glycol or other single phase systems due to power consumption. This is because the heat load capacity of 11b. of refrigerant during phase change is 80 times the heat load capacity of 11b. of water. For example, to maintain the same heat load capacity of water (with a 10 degree F temperature change) and refrigerant flow conditions, the power requirement for a refrigerant pump is about 1/20^{th} of a water pump. The systems described also eliminate problems with oil return to the compressor and condensing unit because the refrigerant only traverses the evaporator and the expansion valve after leaving the condensing unit. The evaporator can be designed for optimum oil drainage, keeping the compressor running smoothly. Finally, by isolating the heat exchanger module during the cooling process, the refrigerant charge can be adjusted optimally for each operating condition, ice making and cooling.

## Claims

1. A refrigerant-based thermal energy storage and cooling system comprising:
a first refrigerant loop (101) containing a first refrigerant comprising:
a condensing unit (102), said condensing unit comprising a compressor (110) and a first condenser (111);
an expansion device (130) connected downstream of said condensing unit (102); and
a first evaporator on a primary side of an isolating heat exchanger (162) located downstream of said expansion device (130);
a second refrigerant loop (103) containing a second refrigerant comprising:
a second condenser on a secondary side of said isolating heat exchanger (162);
a tank (140) filled with a fluid capable of a phase change between liquid and solid and containing a primary heat exchanger (160) therein, said primary heat exchanger (160) in fluid communication with said second condenser and that uses said second refrigerant from said second condenser to cool said fluid and to freeze at least a portion of said fluid within said tank (140);
a load heat exchanger (122) connected to said isolating heat exchanger (162) and said primary heat exchanger (160) that transfers cooling capacity of said second refrigerant to a heat load; and
a liquid refrigerant pump (120) that distributes said second refrigerant from said isolating heat exchanger (162) to said primary heat exchanger (160) or from said primary heat exchanger (160) to said load heat exchanger (122);
**Characterised in that** the system is provided to distribute said second refrigerant from said isolating heat exchanger (162) to said primary heat exchanger (160) by causing the second refrigerant to flow through the primary heat exchanger (160) in a first direction; and to distribute said second refrigerant from said primary heat exchanger (160) to said load heat exchanger (122) by causing the second refrigerant to flow through the primary heat exchanger (160) in a second direction opposite the first direction.

2. The system of claim 1, wherein the primary heat exchanger (160) is provided to act as an evaporator when the second refrigerant flows through the primary heat exchanger (160) in the first direction; and is provided to act as a condenser when the second refrigerant flows through the primary heat exchanger (160) in the second direction.

3. The system of claim 2, wherein the primary heat exchanger comprises a lower header assembly (156) connected to an upper header assembly (154) with a series of freezing and discharge coils (142) to make a fluid/vapor loop within the insulated tank (140), wherein
the second refrigerant enters the primary heat exchanger (160) through the lower header assembly (156) and is then distributed through the coils (142) acting as evaporator freezing coils (142) when the second refrigerant flows in the first direction; and
the second refrigerant enters the primary heat exchanger (160) through the upper header assembly (154) and then proceeds through the coils (142) acting as condenser discharge coils when the second refrigerant flows in the second direction.

4. The system of claim 1 wherein said expansion device (130) is a thermal expansion valve.

5. The system of claim 1 wherein said first refrigerant loop (101) further comprises: a refrigerant receiver for accumulation and storage of said first refrigerant.

6. The system of claim 5 wherein said expansion device (130) is a mixed-phase regulator.

7. The system of claim 1 wherein said fluid is a eutectic material.

8. The system of claim 1 wherein said fluid is water.

9. The system of claim 1 wherein said first refrigerant is a different material from said second refrigerant.

10. The system of claim 1 further comprising:
an air handler unit (150) that assists in distributing cooling from said load heat exchanger (122) to said heat load; and
a photovoltaic power source (170) for powering said liquid refrigeration pump (120) and said air handler (150).

11. The system of claim 1 wherein said second refrigerant loop (103) further comprises: a valve structure (180, 182, 184, 186) for isolating within said second refrigeration loop said isolating heat exchanger (162), said primary heat exchanger (160), and said liquid refrigerant pump (120) to form an ice-make circuit.

12. The systems of claim 1 wherein said second refrigerant loop (103) further comprises: a valve structure (180, 182, 184, 186) for isolating within said second refrigeration loop said primary heat exchanger (160), said liquid refrigerant pump (120), and said load heat exchanger (122) to form an ice-melt circuit.

13. The system of claim 1 wherein said second refrigerant loop (103) further comprises: a valve structure (180, 182, 184, 186) for isolating within said second refrigeration loop said isolating heat exchanger (162), said liquid refrigerant pump (120), and said load heat exchanger (122) to form a direct cooling circuit.

14. The system of claim 1 further comprising: a third refrigerant loop that allows said first refrigerant to bypass said primary side of said isolating heat exchanger (162) and flow through said load heat exchanger (122).

15. The system of claim 14 wherein said third refrigerant loop further comprises: a refrigerant receiver (190) for accumulation and storage of said first refrigerant.

16. The system, of claim 15, wherein said expansion device (130) is a mixed-phase regulator.

17. The system of claim 1, wherein said load heat exchanger (122) is at least one mini-split evaporator.

18. The system of claim 1, further comprising: a refrigerant management vessel (146) connected to receive said second refrigerant from said isolating heat exchanger (162) in a first time period, and to receive said second refrigerant from said primary heat exchanger (162) in a second time period.

19. The system of claim 18, wherein said refrigerant management vessel (146) is connected between said secondary side of said isolating heat exchanger (162) and said primary heat exchanger (160).

20. The system of claim 18, wherein the liquid refrigerant pump (120) is provided for distributing said second refrigerant from said refrigerant management vessel (146) to said primary heat exchanger (160) in said first time period and to said load heat exchanger (122) in said second time period.

21. A method of providing cooling with a refrigerant-based thermal energy storage and cooling system comprising the steps of:
providing cooling to a primary side of an isolating heat exchanger (162) by evaporating a first high-pressure refrigerant within said primary side of said isolating heat exchanger in a first time period;
transferring said cooling to condense a second refrigerant on a secondary side of said isolating heat exchanger (162) in said first time period;
evaporating said second refrigerant in a primary heat exchanger (160) constrained within a tank (140) containing a fluid capable of a phase change between liquid and solid to freeze at least a portion of said fluid and form ice within said tank (140) during said first time period, by causing the second refrigerant to flow through the primary heat exchanger (160) in a first direction: and **characterised by**
condensing said second refrigerant in said primary heat exchanger (160) with said ice, by causing the second refrigerant to flow through the primary heat exchanger (160) in a second direction opposite the first direction, and evaporating said second refrigerant in an evaporator coil (122) to provide load cooling during a second time period.

22. The method of claim 21, further comprising:
providing the primary heat exchanger having a lower header assembly (156) connected to an upper header assembly (154) with a series of freezing and discharge coils (142) to make a fluid/vapor loop within the insulated tank (140);
supplying the second refrigerant to the primary heat exchanger (160) through the lower header assembly (156) and then through the coils (142) acting as evaporator freezing coils (142) when the second refrigerant flows in the first direction; and
supplying the second refrigerant to the primary heat exchanger (160) through the upper header assembly (154) and then through the coils (142) acting as condenser discharge coils when the second refrigerant flows in the second direction.

23. The method of claim 21, further comprising the step of: expanding said first high-pressure refrigerant within said primary side of said isolating heat exchanger (162) with a thermal expansion valve (130).

24. The method of claim 21, further comprising the step of: accumulating and storing said first refrigerant with a refrigerant receiver (190).

25. The method of claim 24, further comprising the step of: expanding said first high-pressure refrigerant within said primary side of said isolating heat exchanger with a mixed-phase regulator (130).

26. The method of claim 21 further comprising the step of: pumping said second refrigerant with a refrigerant pump (120).

27. The method of claim 26, further comprising the step of: utilizing an air handler unit (150) to assist in distributing cooling from said load evaporator coil (122) to said heat load; and, powering said refrigerant pump (120) and said air handler (150) with a photovoltaic power source (170).

28. The method of claim 21, further comprising providing a refrigerant loop (103) containing the second refrigerant, the refrigerant loop (103) comprising:
a condenser on a secondary side of said isolating heat exchanger (162);
the tank (140) containing the primary heat exchanger (160) therein, said primary heat exchanger (160) in fluid communication with said condenser and that uses said second refrigerant from said condenser to cool said fluid and to freeze at least a portion of said fluid within said tank (140);
the evaporator coil (122) connected to said isolating heat exchanger (162) and said primary heat exchanger (160) that transfers cooling capacity of said second refrigerant to a heat load; and
a liquid refrigerant pump (120) that distributes said second refrigerant from said isolating heat exchanger (162) to said primary heat exchanger (160) or from said primary heat exchanger (160) to said load heat exchanger (122).

29. The method of claim 28, further comprising the step of: isolating said secondary side of said isolating heat exchanger (162), said primary heat exchanger (160), a refrigerant management vessel (146), and said liquid refrigerant pump (120) within said refrigeration loop (103) to form an ice-make circuit during said first time period.

30. The method of claim 21 further comprising the step of: providing cooling to said evaporator coil (122) by evaporating said first high-pressure refrigerant within said evaporator coil (122) in a third time period.

31. The method of claim 28, further comprising the step of: isolating said secondary side of said primary heat exchanger (162), a refrigerant management vessel (146), said liquid refrigerant pump (120), and said load evaporator coil (122) to form an ice-melt circuit during said second time period.

32. The method of claim 28, further comprising the step of: isolating said secondary side of said isolating heat exchanger (162), a refrigerant management vessel (146), said liquid refrigerant pump (120), and said load evaporator coil (122) to form a direct cooling circuit during a third time period.

33. The method of claim 28, further comprising the step of: bypassing said primary side of said isolating heat exchanger (162) and said refrigeration loop (103) with a second refrigerant loop that allows said first refrigerant to flow through said load evaporator coil (122) during a third time period.

34. The method of claim 33 further comprising the step of: expanding said first high-pressure refrigerant within said primary side of said isolating heat exchanger (162) with a thermal expansion valve (130).

35. The method of claim 33 further comprising the step of: accumulating and storing said first refrigerant with a refrigerant receiver (190).

36. The method of claim 35 further comprising the step of: expanding said first high-pressure refrigerant within said primary side of said isolating heat exchanger (162) with a mixed-phase regulator (130).

## Patentansprüche

1. Kühlmittel-basiertes Wärmeenergiespeicherungs- und Kühlsystem, das folgendes umfasst:
eine erste Kühlmittelschleife (101), die ein erstes Kühlmittel aufweist und folgendes umfasst:
eine Kondensatoreinheit (102), wobei die genannte Kondensatoreinheit einen Kompressor (110) und einen ersten Kondensator (111) umfasst;
eine Ausdehnungsvorrichtung (130), die stromabwärts der genannten Kondensatoreinheit (102) verbunden ist;
einen ersten Verdampfer auf einer primären Seite eines isolierenden Wärmetauschers (162), der stromabwärts der genannten Ausdehnungsvorrichtung (130) angeordnet ist;
eine zweite Kühlmittelschleife (103), die ein zweites Kühlmittel aufweist und folgendes umfasst:
einen zweiten Kondensator auf einer sekundären Seite des genannten isolierenden Wärmetauschers (162);
einen Tank (140), der mit einem Fluid gefüllt ist, das eine Phasenänderung zwischen flüssig und fest vornehmen kann und darin einen primären Wärmetauscher (160) aufweist, wobei sich der genannte primäre Wärmetauscher (160) in Fluidübertragungsverbindung mit dem genannten zweiten Kondensator befindet und das genannte zweite Kühlmittel von dem genannten zweiten Kondensator verwendet, um das genannte Fluid zu kühlen und um zumindest einen Teil des genannten Fluids in dem genannten Tank (140) einzufrieren;
einen Lastwärmetauscher (122), der mit dem genannten isolierenden Wärmetauscher (162) und dem genannten primären Wärmetauscher (160) verbunden ist, der die Kühlleistung des genannten zweiten Kühlmittels auf eine Wärmelast überträgt; und
eine Flüssigkühlmittelpumpe (120), welche das genannte zweite Kühlmittel von dem genannten isolierenden Wärmetauscher (162) zu dem genannten primären Wärmetauscher (160) oder von dem genannten primären Wärmetauscher (160) zu dem genannten Lastwärmetauscher (122) verteilt;
**dadurch gekennzeichnet, dass** das System dafür vorgesehen ist, das genannte zweite Kühlmittel von dem genannten isolierenden Wärmetauscher (162) zu dem genannten primären Wärmetauscher (160) zu verteilen, indem bewirkt wird, dass das zweite Kühlmittel in eine erste Richtung durch den primären Wärmetauscher (160) fließt; und um das genannte zweite Kühlmittel von dem genannten primären Wärmetauscher (160) zu dem genannten Lastwärmetauscher (122) zu verteilen, indem bewirkt wird, dass das zweite Kühlmittel in eine zweite Richtung, die entgegengesetzt zu der ersten Richtung verläuft, durch den primären Wärmetauscher (160) fließt.

2. System nach Anspruch 1, wobei der primäre Wärmetauscher (160) vorgesehen ist, um als ein Verdampfer zu fungieren, wenn das zweite Kühlmittel in die erste Richtung durch den primären Wärmetauscher (160) fließt; und wobei der Wärmetauscher so vorgesehen ist, dass er als ein Kondensator fungiert, wenn das zweite Kühlmittel in die zweite Richtung durch den primären Wärmetauscher (160) fließt.

3. System nach Anspruch 2, wobei der primäre Wärmetauscher eine untere Verteilereinheit (156) umfasst, die mit einer oberen Verteilereinheit (154) mit einer Reihe von Gefrier- und Ausstoßspulen (142) verbunden ist, um eine Fluid/Dampf-Schleife in dem isolierten Tank (140) zu bilden, wobei:
das zweite Kühlmittel durch die untere Verteilereinheit (156) in den primären Wärmetauscher (160) eintritt und danach durch die Spulen (142) verteilt wird, die als Verdampfer-Gefrierspulen (142) fungieren, wenn das zweite Kühlmittel in die erste Richtung fließt; und
das zweite Kühlmittel durch die obere Verteilereinheit (154) in den primären Wärmetauscher (160) eintritt und danach durch die Spulen (142) verläuft, wobei diese als Kondensator-Ausstoßspulen fungieren, wenn das zweite Kühlmittel in die zweite Richtung fließt.

4. System nach Anspruch 1, wobei es sich bei der genannten Ausdehnungsvorrichtung (130) um ein thermisches Ausdehnungsventil handelt.

5. System nach Anspruch 1, wobei die genannte erste Kühlmittelschleife (101) ferner folgendes umfasst: einen ersten Kühlmittelempfänger zum Sammeln und Speichern des genannten ersten Kühlmittels.

6. System nach Anspruch 5, wobei es sich bei der genannten Ausdehnungsvorrichtung (130) um einen Mischphasenregler handelt.

7. System nach Anspruch 1, wobei es sich bei dem genannten Fluid um einen eutektischen Stoff handelt.

8. System nach Anspruch 1, wobei es sich bei dem genannten Fluid um Wasser handelt.

9. System nach Anspruch 1, wobei es sich bei dem genannten ersten Kühlmittel um einen anderen Stoff als bei dem genannten zweiten Kühlmittel handelt.

10. System nach Anspruch 1, wobei dieses ferner folgendes umfasst:
eine Luftbehandlungseinheit (150), welche die Verteilung der Kühlung von dem genannten Lastwärmetauscher (122) auf die genannte Wärmelast unterstützt; und
eine photovoltaische Energiequelle (170) zur Energieversorgung der genannten Flüssigkühlmittelpumpe (120) und der genannten Luftbehandlungseinheit (150).

11. System nach Anspruch 1, wobei die genannte zweite Kühlmittelschleife (103) ferner folgendes umfasst: eine Ventilstruktur (180, 182, 184, 186) zum Isolieren innerhalb der genannten zweiten Kühlmittelschleife, des genannten isolierenden Wärmetauschers (162), des genannten primären Wärmetauschers (160) und der genannten Flüssigkühlmittelpumpe (120), so dass ein Eiserzeugungskreis gebildet wird.

12. System nach Anspruch 1, wobei die genannte zweite Kühlmittelschleife (103) ferner folgendes umfasst: eine Ventilstruktur (180, 182, 184, 186) zum Isolieren des genannten primären Wärmetauschers (160), der genannten Flüssigkühlmittelpumpe (120) und des genannten Lastwärmetauschers (122) innerhalb der genannten zweiten Kühlmittelschleife, so dass ein Eisschmelzkreis gebildet wird.

13. System nach Anspruch 1, wobei die genannte zweite Kühlmittelschleife (103) ferner folgendes umfasst: eine Ventilstruktur (180, 182, 184, 186) zum Isolieren des genannten isolierenden Wärmetauschers (162), der genannten Flüssigkühlmittelpumpe (120) und des genannten Lastwärmetauschers (122) innerhalb der genannten zweiten Kühlmittelschleife, so dass ein direkter Kühlkreis gebildet wird.

14. System nach Anspruch 1, wobei dieses ferner folgendes umfasst: eine dritte Kühlmittelschleife, die es ermöglicht, dass das genannte erste Kühlmittel die genannte primäre Seite des genannten isolierenden Wärmetauschers (162) umgeht und durch den genannten Lastwärmetauscher (122) fließt.

15. System nach Anspruch 14, wobei die genannte dritte Kühlmittelschleife ferner folgendes umfasst: einen Kühlmittelempfänger (190) zum Sammeln und Speichern des genannten ersten Kühlmittels.

16. System nach Anspruch 15, wobei es sich bei der genannten Ausdehnungsvorrichtung (130) um einen Mischphasenregler handelt.

17. System nach Anspruch 1, wobei es sich bei dem genannten Lastwärmetauscher (122) um mindestens einen Minisplit-Verdampfer handelt.

18. System nach Anspruch 1, wobei das System ferner folgendes umfasst: ein Kühlmittelmanagementgefäß (146), das so verbunden ist, dass es das genannte zweite Kühlmittel in einem ersten Zeitraum von dem genannten isolierenden Wärmetauscher (162) empfängt, und so dass er das genannte zweite Kühlmittel in einem zweiten Zeitraum von dem genannten primären Wärmetauscher (162) empfängt.

19. System nach Anspruch 18, wobei das genannt Kühlmittelmanagementgefäß (146) zwischen der genannten sekundären Seite des genannten isolierenden Wärmetauschers (162) und dem genannten primären Wärmetauscher (160) verbunden ist.

20. System nach Anspruch 18, wobei die Kühlmittelpumpe (120) vorgesehen ist zum Verteilen des genannten zweiten Kühlmittels von dem genannten Kühlmittelmanagementgefäß (146) an den genannten primären Wärmetauscher (160) innerhalb des genannten ersten Zeitraums sowie an den genannten Lastwärmetauscher (122) innerhalb des genannten zweiten Wärmetauschers.

21. Verfahren zum Bereitstellen von Kühlung mit einem Kühlmittel-basierten Wärmeenergiespeicherungs- und Kühlsystem, wobei das Verfahren die folgenden Schritte umfasst:
das Bereitstellen von Kühlung auf eine primäre Seite eines isolierenden Wärmetauschers (162) durch Verdampfen eines ersten Hochdruck-Kühlmittels in der genannten primären Seite des genannten isolierenden Wärmetauschers innerhalb eines ersten Zeitraums;
das Übertragen der genannten Kühlung zum Kondensieren eines zweiten Kühlmittels auf einer sekundären Seite des genannten isolierenden Wärmetauschers (162) innerhalb des genannten ersten Zeitraums;
das Verdampfen des genannten zweiten Kühlmittels in einem primären Wärmetauscher (160), der in einem Tank (140) eingeschlossen ist, der ein Fluid enthält, bei dem eine Phasenänderung zwischen flüssig und fest möglich ist, um innerhalb des genannten ersten Zeitraums zumindest einen Teil des genannten Fluids einzufrieren und um Eis in dem genannten Tank (140) zu bilden, indem bewirkt wird, dass das zweite Kühlmittel in eine erste Richtung durch den primären Wärmetauscher (160) fließt; und **gekennzeichnet durch**:
das Kondensieren des genannten zweiten Kühlmittels in dem genannten primären Wärmetauscher (160) mit dem genannten Eis, indem bewirkt wird, dass das genannte zweite Kühlmittel in eine zweite Richtung, die zu der ersten Richtung entgegengesetzt ist, **durch** den primären Wärmetauscher (160) fließt, und das Verdampfen des genannten zweiten Kühlmittels in einer Verdampferspule (122), um eine Lastkühlung während einem zweiten Zeitraum vorzusehen.

22. Verfahren nach Anspruch 21, wobei dieses ferner folgendes umfasst:
das Bereitstellen des primären Wärmetauschers mit einer unteren Verteilereinheit (156), die mit einer oberen Verteilereinheit (154) mit einer Reihe von Gefrier- und Ausstoßspulen (142) verbunden ist, um eine Fluid/Dampf-Schleife in dem isolierten Tank (140) zu bilden, wobei:
das Zuführen des zweiten Kühlmittels durch die untere Verteilereinheit (156) an den primären Wärmetauscher (160) und danach durch die Spulen (142), die als Verdampfer-Gefrierspulen (142) fungieren, wenn das zweite Kühlmittel in die erste Richtung fließt; und
das Zuführen des zweiten Kühlmittels durch die obere Verteilereinheit (154) an den primären Wärmetauscher (160) und danach durch die Spulen (142), wobei diese als Kondensator-Ausstoßspulen fungieren, wenn das zweite Kühlmittel in die zweite Richtung fließt.

23. Verfahren nach Anspruch 21, wobei dieses ferner den folgenden Schritt umfasst: das Ausdehnen des genannten ersten Hochdruck-Kühlmittels in der genannten primären Seite des genannten isolierenden Wärmetauschers (162) mit einem thermischen Ausdehnungsventil (130).

24. Verfahren nach Anspruch 21, wobei dieses ferner den folgenden Schritt umfasst: das Sammeln und Speichern des genannten ersten Kühlmittels mit einem Kühlmittelempfänger (190).

25. Verfahren nach Anspruch 24, wobei dieses ferner den folgenden Schritt umfasst: das Ausdehnen des genannten ersten Hochdruck-Kühlmittels in der genannten primären Seite des genannten isolierenden Wärmetauschers mit einem Mischphasenregler (130).

26. Verfahren nach Anspruch 21, wobei dieses ferner den folgenden Schritt umfasst: das Pumpen des genannten zweiten Kühlmittels mit einer Kühlmittelpumpe (120).

27. Verfahren nach Anspruch 26, wobei dieses ferner den folgenden Schritt umfasst: das Einsetzen einer Luftbehandlungseinheit (150) zur Unterstützung der Verteilung der Kühlung von der genannten Lastverdampferspule (122) auf die genannte Wärmelast; und die Energieversorgung der genannten Flüssigkühlmittelpumpe (120) und der genannten Luftbehandlungseinheit (150) durch eine photovoltaische Energiequelle (170).

28. Verfahren nach Anspruch 21, wobei dieses ferner das Bereitstellen einer Kühlmittelschleife (103) umfasst, die das zweite Kühlmittel enthält, wobei die Kühlmittelschleife (103) folgendes umfasst:
einen Kondensator auf einer sekundären Seite des genannten isolierenden Wärmetauschers (162);
wobei der Tank (140) darin den primären Wärmetauscher (160) aufweist, wobei sich der genannte primäre Wärmetauscher (160) in Fluidübertragungsverbindung mit dem genannten Kondensator verbindet und das genannte zweite Kühlmittel von dem genannten Kondensator nutzt, um das genannte Fluid zu kühlen und um zumindest einen Teil des genannten Fluids in dem genannten Tank (140) zu gefrieren;
wobei die Verdampferspule (122) mit dem genannten isolierenden Wärmetauscher (162) und dem genannten primären Wärmetauscher (160) verbunden ist, der die Kühlleistung des genannten zweiten Kühlmittels auf eine Wärmelast überträgt; und
eine Flüssigkühlmittelpumpe (120), welche das genannte zweite Kühlmittel von dem genannten isolierenden Wärmetauscher (162) an den genannten primären Wärmetauscher (160) oder von dem genannten primären Wärmetauscher (160) zu dem genannten Lastwärmetauscher (122) verteilt.

29. Verfahren nach Anspruch 28, wobei dieses ferner den folgenden Schritt umfasst: das Isolieren der genannten sekundären Seite des genannten isolierenden Wärmetauschers (162), des genannten primären Wärmetauschers (160), eines Kühlmittelmanagementgefäßes (146) und der genannten Flüssigkühlmittelpumpe (120) in der genannten Kühlmittelschleife (103), so dass in dem genannten ersten Zeitraum ein Eiserzeugungskreis gebildet wird.

30. Verfahren nach Anspruch 21, wobei dieses ferner den folgenden Schritt umfasst. das Bereitstellen von Kühlung an die genannte Verdampferspule (122) durch Verdampfen des genannten ersten Hochdruck-Kühlmittels in einem dritten Zeitraum in der genannten Verdampferspule (122).

31. Verfahren nach Anspruch 28, wobei dieses ferner den folgenden Schritt umfasst: das Isolieren der genannten sekundären Seite des genannten primären Wärmetauschers (162), eines Kühlmittelmanagementgefäßes (146), der genannten Flüssigkühlmittelpumpe (120) und der genannten Lastverdampferspule (122), so dass in dem genannten zweiten Zeitraum ein Eisschmelzkreis gebildet wird.

32. Verfahren nach Anspruch 28, wobei dieses ferner den folgenden Schritt umfasst: das Isolieren der genannten sekundären Seite des genannten isolierenden Wärmetauschers (162), eines Kühlmittelmanagementgefäßes (146), der genannten Flüssigkühlmittelpumpe (120) und der genannten Lastverdampferspule (122), so dass in einem dritten Zeitraum ein direkter Kühlkreis gebildet wird.

33. Verfahren nach Anspruch 28, wobei dieses ferner den folgenden Schritt umfasst: das Umgehen der genannten primären Seite des genannten isolierenden Wärmetauschers (162) und der genannten Kühlmittelschleife (103) mit einer zweiten Kühlmittelschleife, die es ermöglicht, dass das genannte erste Kühlmittel in einem dritten Zeitraum durch die genannte Lastverdampferspule (122) fließt.

34. Verfahren nach Anspruch 33, wobei dieses ferner den folgenden Schritt umfasst: das Ausdehnen des genannten ersten Hochdruck-Kühlmittels in der genannten primären Seite des genannten isolierenden Wärmetauschers (162) mit einem thermischen Ausdehnungsventil (130).

35. Verfahren nach Anspruch 33, wobei dieses ferner den folgenden Schritt umfasst: das Sammeln und Speichern des genannten ersten Kühlmittels mit einem Kühlmittelempfänger (190).

36. Verfahren nach Anspruch 35, wobei dieses ferner den folgenden Schritt umfasst: das Ausdehnen des genannten ersten Hochdruck-Kühlmittels in der genannten primären Seite des genannten isolierenden Wärmetauschers (162) mit einem Mischphasenregler (130).

## Revendications

1. Système de stockage d'énergie thermique et de refroidissement avec réfrigérant comprenant :
une première boucle de réfrigérant (101) contenant un premier réfrigérant comprenant :
une unité de condensation (102), ladite unité de condensation comprenant un compresseur (110) et un premier condenseur (111) ;
un dispositif d'expansion (130) connecté en aval de ladite unité de condensation (102) ; et
un premier évaporateur sur un côté primaire d'un échangeur de chaleur isolant (162) situé en aval dudit dispositif d'expansion (130) ;
une deuxième boucle de réfrigérant (103) contenant un second réfrigérant comprenant :
un second condenseur sur un côté secondaire dudit échangeur de chaleur isolant (162) ;
un réservoir (140) rempli d'un fluide capable d'un changement de phase entre liquide et solide et contenant un échangeur de chaleur primaire (160), ledit échangeur de chaleur primaire (160) étant en communication fluidique avec ledit second condenseur et utilisant ledit second réfrigérant provenant dudit second condenseur pour refroidir ledit fluide et pour congeler au moins une partie dudit fluide à l'intérieur dudit réservoir (140) ;
un échangeur de chaleur de charge (122) connecté audit échangeur de chaleur isolant (162) et audit échangeur de chaleur primaire (160) qui transfère la capacité de refroidissement dudit second réfrigérant à une charge thermique ; et
une pompe à réfrigérant liquide (120) qui distribue ledit second réfrigérant dudit échangeur de chaleur isolant (162) audit échangeur de chaleur primaire (160) ou dudit échangeur de chaleur primaire (160) audit échangeur de chaleur de charge (122) ;
**caractérisé en ce que** le système est prévu pour distribuer ledit second réfrigérant dudit échangeur de chaleur isolant (162) audit échangeur de chaleur primaire (160) en amenant le second réfrigérant à s'écouler à travers l'échangeur de chaleur primaire (160) dans une première direction ; et pour distribuer ledit second réfrigérant dudit échangeur de chaleur primaire (160) audit échangeur de chaleur de charge (122) en amenant le second réfrigérant à s'écouler à travers l'échangeur de chaleur primaire (160) dans une seconde direction opposée à la première direction.

2. Système selon la revendication 1, dans lequel l'échangeur de chaleur primaire (160) est prévu pour agir comme un évaporateur lorsque le second réfrigérant s'écoule à travers l'échangeur de chaleur primaire (160) dans la première direction ; et prévu pour agir comme un condenseur lorsque le second réfrigérant s'écoule à travers l'échangeur de chaleur primaire (160) dans la seconde direction.

3. Système selon la revendication 2, dans lequel l'échangeur de chaleur primaire comprend un ensemble formant colonne inférieure (156) connecté à un ensemble formant colonne supérieure (154) avec une série de bobines de congélation et de décharge (142) pour faire une boucle de fluide/vapeur dans le réservoir isolé (140), dans lequel :
le second réfrigérant entre dans l'échangeur de chaleur primaire (160) à travers l'ensemble formant colonne inférieure (156) et est ensuite distribué à travers les bobines (142) agissant comme des bobines de congélation d'évaporateur (142) lorsque le second réfrigérant s'écoule dans la première direction ; et
le second réfrigérant entre dans l'échangeur de chaleur primaire (160) à travers l'ensemble formant colonne supérieure (154) et passe ensuite à travers les bobines (142) agissant comme des bobines de décharge de condenseur (142) lorsque le second réfrigérant s'écoule dans la seconde direction.

4. Procédé selon la revendication 1, dans lequel ledit dispositif d'expansion (130) est un détendeur thermostatique.

5. Système selon la revendication 1, dans lequel ladite première boucle de réfrigérant (101) comprend en outre : un récepteur de réfrigérant pour l'accumulation et le stockage dudit premier réfrigérant.

6. Procédé selon la revendication 5, dans lequel ledit dispositif d'expansion (130) est un régulateur mixte.

7. Procédé selon la revendication 1, dans lequel ledit fluide est un matériau eutectique.

8. Procédé selon la revendication 1, dans lequel ledit fluide est de l'eau.

9. Système selon la revendication 1, dans lequel ledit premier réfrigérant est un matériau différent dudit second réfrigérant.

10. Système selon la revendication 1, comprenant en outre :
une unité de traitement d'air (150) qui aide à distribuer du refroidissement dudit échangeur de chaleur de charge (122) à ladite charge thermique ; et
une source d'alimentation photovoltaïque (170) pour alimenter ladite pompe à réfrigérant liquide (120) et ladite centrale de traitement d'air (150).

11. Système selon la revendication 1, dans lequel ladite deuxième boucle de réfrigérant (103) comprend en outre : une structure de valve (180, 182, 184, 186) pour isoler dans ladite deuxième boucle de réfrigération ledit échangeur de chaleur isolant (162), ledit échangeur de chaleur primaire (160), et ladite pompe à réfrigérant liquide (120) pour former un circuit générateur de glace.

12. Système selon la revendication 1, dans lequel ladite deuxième boucle de réfrigérant (103) comprend en outre : une structure de valve (180, 182, 184, 186) pour isoler dans ladite deuxième boucle de réfrigération ledit échangeur de chaleur primaire (160), ladite pompe à réfrigérant liquide (120), et ledit échangeur de chaleur de charge (122) pour former un circuit de fusion de glace.

13. Système selon la revendication 1, dans lequel ladite deuxième boucle de réfrigérant (103) comprend en outre : une structure de valve (180, 182, 184, 186) pour isoler dans ladite deuxième boucle de réfrigération ledit échangeur de chaleur isolant (162), ladite pompe à réfrigérant liquide (120), et ledit échangeur de chaleur de charge (122) pour former un circuit de refroidissement direct.

14. Système selon la revendication 1 comprenant en outre : une troisième boucle de réfrigérant qui permet audit premier réfrigérant de contourner ledit côté primaire dudit échangeur de chaleur isolant (162) et de s'écouler à travers ledit échangeur de chaleur de charge (122).

15. Système selon la revendication 14, dans lequel ladite troisième boucle de réfrigérant comprend en outre : un récepteur de réfrigérant (190) pour l'accumulation et le stockage dudit premier réfrigérant.

16. Procédé selon la revendication 15, dans lequel ledit dispositif d'expansion (130) est un régulateur mixte.

17. Système selon la revendication 1, dans lequel ledit échangeur de chaleur de charge (122) est au moins un évaporateur bibloc.

18. Système selon la revendication 1, comprenant en outre : un récipient de gestion de réfrigérant (146) connecté pour recevoir ledit second réfrigérant dudit échangeur de chaleur isolant (162) dans une première période de temps, et pour recevoir ledit second réfrigérant dudit échangeur de chaleur primaire (162) dans une deuxième période de temps.

19. Système selon la revendication 18, dans lequel ledit récipient de gestion de réfrigérant (146) est connecté entre ledit côté secondaire dudit échangeur de chaleur isolant (162) et ledit échangeur de chaleur primaire (160).

20. Système selon la revendication 18, dans lequel la pompe à réfrigérant liquide (120) est prévue pour distribuer ledit second réfrigérant dudit récipient de gestion de réfrigérant (146) audit échangeur de chaleur primaire (160) dans ladite première période de temps et audit échangeur de chaleur de charge (122) dans ladite deuxième période de temps.

21. Procédé de fourniture de refroidissement avec un système de stockage d'énergie thermique et de refroidissement avec réfrigérant comprenant les étapes consistant à :
fournir un refroidissement à un côté primaire d'un échangeur de chaleur isolant (162) par évaporation d'un premier réfrigérant haute pression dans ledit côté primaire dudit échangeur de chaleur isolant dans une première période de temps ;
transférer ledit refroidissement pour condenser un second réfrigérant sur un côté secondaire dudit échangeur de chaleur isolant (162) dans ladite première période de temps ;
évaporer ledit second réfrigérant dans un échangeur de chaleur primaire (160) contenu dans un réservoir (140) contenant un fluide capable d'un changement de phase entre liquide et solide pour congeler au moins une partie dudit fluide et former de la glace à l'intérieur dudit réservoir (140) pendant ladite première période de temps, en amenant le second réfrigérant à s'écouler à travers l'échangeur de chaleur primaire (160) dans une première direction ; et **caractérisé par** l'étape consistant à
condenser ledit second réfrigérant dans ledit échangeur de chaleur primaire (160) avec ladite glace, en amenant le second réfrigérant à s'écouler à travers l'échangeur de chaleur primaire (160) dans une seconde direction opposée à la première direction, et en évaporant ledit second réfrigérant dans une bobine d'évaporateur (122) pour fournir un refroidissement de charge pendant une deuxième période de temps.

22. Procédé selon la revendication 21, comprenant en outre les étapes consistant à :
fournir l'échangeur de chaleur primaire avec un ensemble formant colonne inférieure (156) connecté à un ensemble formant colonne supérieure (154) avec une série de bobines de congélation et de décharge (142) pour faire une boucle de fluide/vapeur dans le réservoir isolé (140) ;
fournir le second réfrigérant à l'échangeur de chaleur primaire (160) à travers l'ensemble formant colonne inférieure (156) et puis à travers les bobines (142) agissant comme des bobines de congélation d'évaporateur (142) lorsque le second réfrigérant s'écoule dans la première direction ; et
fournir le second réfrigérant à l'échangeur de chaleur primaire (160) à travers l'ensemble formant colonne supérieure (154) puis à travers les bobines (142) agissant comme des bobines de décharge de condenseur lorsque le second réfrigérant s'écoule dans la seconde direction.

23. Procédé selon la revendication 21, comprenant en outre l'étape consistant à : dilater ledit premier réfrigérant haute pression dans ledit côté primaire dudit échangeur de chaleur isolant (162) avec un détendeur thermostatique (130).

24. Procédé selon la revendication 21, comprenant en outre l'étape consistant à : accumuler et stocker ledit premier réfrigérant avec un récepteur de réfrigérant (190).

25. Procédé selon la revendication 24, comprenant en outre l'étape consistant à : dilater ledit premier réfrigérant haute pression dans ledit côté primaire dudit échangeur de chaleur isolant avec un régulateur mixte (130).

26. Procédé selon la revendication 21, comprenant en outre l'étape consistant à : pomper ledit second réfrigérant avec une pompe à réfrigérant (120).

27. Procédé selon la revendication 26, comprenant en outre l'étape consistant à : utiliser une unité de traitement d'air (150) pour aider à distribuer le refroidissement de ladite bobine d'évaporateur de charge (122) vers ladite charge thermique ; et, alimenter ladite pompe à réfrigérant (120) et ladite centrale de traitement d'air (150) avec une source d'alimentation photovoltaïque (170).

28. Procédé selon la revendication 21, comprenant en outre l'étape consistant à fournir une boucle de réfrigérant (103) contenant le second réfrigérant, la boucle de circuit réfrigérant (103) comprenant :
un condenseur sur un côté secondaire dudit échangeur de chaleur isolant (162) ;
le réservoir (140) contenant l'échangeur de chaleur primaire (160), ledit échangeur de chaleur primaire (160) étant en communication fluidique avec ledit condensateur et utilisant ledit second réfrigérant dudit condenseur pour refroidir ledit fluide et congeler au moins une partie dudit fluide à l'intérieur dudit réservoir (140) ;
la bobine d'évaporateur (122) connectée audit échangeur de chaleur isolant (162) et audit échangeur de chaleur primaire (160) qui transfère la capacité de refroidissement dudit second réfrigérant à une charge thermique ; et
une pompe à réfrigérant liquide (120) qui distribue ledit second réfrigérant dudit échangeur de chaleur isolant (162) audit échangeur de chaleur primaire (160) ou dudit échangeur de chaleur primaire (160) audit échangeur de chaleur de charge (122).

29. Procédé selon la revendication 28, comprenant en outre l'étape consistant à : isoler ledit côté secondaire dudit échangeur de chaleur isolant (162), ledit échangeur de chaleur primaire (160), un récipient de gestion de réfrigérant (146), et ladite pompe à réfrigérant liquide (120) dans ladite boucle de réfrigération (103) pour former un circuit générateur de glace pendant ladite première période de temps.

30. Procédé selon la revendication 21, comprenant en outre l'étape consistant à : fournir un refroidissement à ladite bobine d'évaporateur (122) en évaporant ledit premier réfrigérant haute pression à l'intérieur de ladite bobine d'évaporateur (122) dans une troisième période de temps.

31. Procédé selon la revendication 28, comprenant en outre l'étape consistant à : isoler ledit côté secondaire dudit échangeur de chaleur isolant (162), un récipient de gestion de réfrigérant (146), ladite pompe à réfrigérant liquide (120), et ladite bobine d'évaporateur de charge (122) pour former un circuit de fusion de glace pendant ladite deuxième période de temps.

32. Procédé selon la revendication 28, comprenant en outre l'étape consistant à : isoler ledit côté secondaire dudit échangeur de chaleur isolant (162), un récipient de gestion de réfrigérant (146), ladite pompe à réfrigérant liquide (120), et ladite bobine d'évaporateur de charge (122) pour former un circuit de refroidissement direct pendant une troisième période de temps.

33. Procédé selon la revendication 28, comprenant en outre l'étape consistant à : contourner ledit côté primaire dudit échangeur de chaleur isolant (162) et ladite boucle de réfrigérant (103) avec une deuxième boucle de réfrigérant qui permet audit premier réfrigérant de s'écouler à travers ladite bobine d'évaporateur de charge (122) pendant une troisième période de temps.

34. Procédé selon la revendication 33, comprenant en outre l'étape consistant à : dilater ledit premier réfrigérant haute pression dans ledit côté primaire dudit échangeur de chaleur isolant (162) avec un détendeur thermostatique (130).

35. Procédé selon la revendication 33, comprenant en outre l'étape consistant à : accumuler et stocker ledit premier réfrigérant avec un récepteur de réfrigérant (190).

36. Procédé selon la revendication 35, comprenant en outre l'étape consistant à : dilater ledit premier réfrigérant haute pression dans ledit côté primaire dudit échangeur de chaleur isolant (162) avec un régulateur mixte (130).
